(19) Europäisches Patentamt
European Patent Office
Office européen des brevets

(11) **EP 2 977 959 B1**

(12) **EUROPEAN PATENT SPECIFICATION**

(45) Date of publication and mention
of the grant of the patent:
**20.03.2019 Bulletin 2019/12**

(51) Int Cl.:
**G06T 11/00** (2006.01)    **G06T 7/90** (2017.01)
**H04N 1/62** (2006.01)    **H04N 9/64** (2006.01)

(21) Application number: **15169404.9**

(22) Date of filing: **27.05.2015**

(54) **METHOD AND DEVICE FOR ADJUSTING SKIN COLOR**

VERFAHREN UND VORRICHTUNG ZUR EINSTELLUNG DER HAUTFARBE

PROCÉDÉ ET DISPOSITIF PERMETTANT D'AJUSTER LA COULEUR DE LA PEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2014 CN 201410351282**

(43) Date of publication of application:
**27.01.2016 Bulletin 2016/04**

(73) Proprietor: **Xiaomi Inc.
Beijing 100085 (CN)**

(72) Inventors:
• **Wang, Lin**
**100085 BEIJING (CN)**
• **Xu, Xiaozhou**
**100085 BEIJING (CN)**
• **Chen, Zhijun**
**100085 BEIJING (CN)**

(74) Representative: **Underwood, Nicolas Patrick et al
Cabinet Beau de Loménie
158, rue de l'Université
75340 Paris Cedex 07 (FR)**

(56) References cited:
**EP-A1- 2 509 047    US-A1- 2006 176 400**

• **KAKUMANU ET AL: "A survey of skin-color
modeling and detection methods", PATTERN
RECOGNITION, ELSEVIER, GB, vol. 40, no. 3, 6
November 2006 (2006-11-06), pages 1106-1122,
XP005732829, ISSN: 0031-3203, DOI:
10.1016/J.PATCOG.2006.06.010**
• **DO-HUN KIM ET AL: "Preferred skin color
reproduction based on adaptive affine
transform", IEEE TRANSACTIONS ON
CONSUMER ELECTRONICS, vol. 51, no. 1,
February 2005 (2005-02), pages 191-197,
XP055283256, NEW YORK, NY, US ISSN:
0098-3063, DOI: 10.1109/TCE.2005.1405719**

EP 2 977 959 B1

**Description**

**TECHNICAL FIELD**

The present disclosure relates to the field of image processing, and more particularly, to a method and a device for adjusting skin color.

**BACKGROUND**

With the development of image processing technology and the increasing of user's requirements, beautification process on a captured image has become an indispensable function of a mobile terminal.

The existing mobile terminal, when performing beautification process on the image, may adjust skin color in the image, for example, the user selects a target color, and the mobile terminal converts the color in the skin color region of the image to the target color.

In the process of achieving the present disclosure, it is found that the foregoing manner has, for example, the following defects: the identification ability of human eyes on the color is limited; if the target color is selected by the user merely, there is a great difference between the converted skin color and the actual skin color, thus the image is easy to be distorted and the beautification effect is poor. Documents EP 2 509 047 and "A survey of skin-color modeling and detection methods"(KAKUMANU ET AL, PATTERN RECOGNITION, VOL. 40, NO. 3, 6 November 2006, PAGES 1106-1122) disclose respectively a known method for correcting skin color and examples of color models for skin color detection.

**SUMMARY**

In order to overcome the problems in the related art, the present disclosure provides a method for adjusting skin color according to claim 1.

Optionally, the step of selecting the designated skin color model most similar to the skin color region from the preset skin color models comprises:

calculating a difference between the original mean value and the preset mean values of the preset skin color models and

selecting the designated skin color model from the preset skin color models, the difference between the preset mean value of this designated skin color model and the original mean value being minimum.

Optionally, the step of selecting the designated skin color model most similar to the skin color region from the preset skin color models comprises:

calculating an Euclidean distance between the original mean value and the preset mean values; and
selecting the designated skin color model from the preset skin color models, the Euclidean distance between the preset mean value of this designated skin color model and the original mean value being minimum.

Optionally, the color data is YUV data, and the step of determining the target color data according to the original color data, the original mean value, the original standard deviation, and the preset mean value and the preset standard deviation of the designated skin color model comprises:

with respect to each pixel in the skin color region, determining the target color data of the pixel according to the original color data, the original mean value, and the original standard deviation of the pixel, and the preset mean value and the preset standard deviation of the designated skin color model by applying formulas as follows:

$$Y^* = meanY_{iType} + \frac{deltaY_{iType} * (Y - meanY)}{deltaY} \quad ;$$

$$U^* = meanU_{iType} + \frac{deltaU_{iType} * (U - meanU)}{deltaU} \quad ;$$

$$V^* = meanV_{iType} + \frac{deltaV_{iType} * (V - meanV)}{deltaV} \quad ;$$

wherein $\overline{(Y,U,V)}$ is the original color data of the pixel, $Y$ is a value of the original color data on a dimension Y in YUV space, $U$ is a value of the original color data on a dimension U in the YUV space, and $V$ is a value of the original color data on a dimension V in the YUV space;

$\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space;

$\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space;

$\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space;

$\overline{(meanY_{iType},meanU_{iType},meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; and

$\overline{(deltaY_{iType},deltaU_{iType},deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

Optionally, the step of adjusting the skin color region according to the target color data comprises:
adjusting the original color data of each pixel in the skin color region to be the target color data of each pixel.

Optionally, the at least one preset skin color model comprises a first preset skin color model, a second preset skin color model, a third preset skin color model, a fourth preset skin color model, a fifth preset skin color model and a sixth preset skin color model;

a preset mean value and a preset standard deviation of the first preset skin color model are obtained by counting color data of sample images of light white people;

a preset mean value and a preset standard deviation of the second preset skin color model are obtained by counting color data of sample images of dark white people;

a preset mean value and a preset standard deviation of the third preset skin color model are obtained by counting color data of sample images of light yellow people;

a preset mean value and a preset standard deviation of the fourth preset skin color model are obtained by counting color data of sample images of dark yellow people;

a preset mean value and a preset standard deviation of the fifth preset skin color model are obtained by counting color data of sample images of light black people; and

a preset mean value and a preset standard deviation of the sixth preset skin color model are obtained by counting color data of sample images of dark black people.

According to a second aspect, the invention relates to a device for adjusting skin color according to claim 7.

Optionally, the skin color model designation module comprises the features of claims 8 and 9.

Optionally, the device employs YUV data as the color data;
the target color determination module is configured to, with respect to each pixel in the skin color region, determine the target color data of the pixel according to the original color data, the original mean value, and the original standard deviation of the pixel, and the preset mean value and the preset standard deviation of the designated skin color model by applying formulas as follows:

$$Y^* = meanY_{iType} + \frac{deltaY_{iType} * (Y - meanY)}{deltaY} \ ;$$

$$U^* = meanU_{iType} + \frac{deltaU_{iType} * (U - meanU)}{deltaU} \ ;$$

$$V^* = meanV_{iType} + \frac{deltaV_{iType} * (V - meanV)}{deltaV} \ ;$$

wherein $\overline{(Y,U,V)}$ is the original color data of the pixel, $Y$ is a value of the original color data on a dimension Y in a YUV space, $U$ is a value of the original color data on a dimension U in the YUV space, and $V$ is a value of the original color data on a dimension V in the YUV space;

$\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space;

$\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space;

$\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space;

$\overline{(meanY_{iType},meanU_{iType},meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; and

$\overline{(deltaY_{iType},deltaU_{iType},deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

Optionally, the skin color adjustment module comprises:
a skin color adjustment unit configured to adjust the original color data of each pixel in the skin color region to be the target color data of each pixel.

Optionally, the device further comprises:

a skin color model preset module configured to set the plurality of preset skin color models, the models comprising a first preset skin color model, a second preset skin color model, a third preset skin color model, a fourth preset skin color model, a fifth preset skin color model and a sixth preset skin color model;
a preset mean value and a preset standard deviation of the first preset skin color model are obtained by counting color data of sample images of light white people;
a preset mean value and a preset standard deviation of the second preset skin color model are obtained by counting color data of sample images of dark white people;
a preset mean value and a preset standard deviation of the third preset skin color model are obtained by counting color data of sample images of light yellow people;
a preset mean value and a preset standard deviation of the fourth preset skin color model are obtained by counting color data of sample images of dark yellow people;
a preset mean value and a preset standard deviation of the fifth preset skin color model are obtained by counting color data of sample images of light black people; and
a preset mean value and a preset standard deviation of the sixth preset skin color model are obtained by counting color data of sample images of dark black people.

According to a third aspect, the invention relates to a device for adjusting skin color according to claim 13.
In one particular embodiment, the steps of the method for adjusting a skin color are determined by computer program instructions.

Consequently, according to a fourth aspect, the invention is also directed to a computer program for executing the steps of a method for adjusting a skin color as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may comprise the following advantageous effects:

according to the method and the device provided by the embodiment, the designated skin color model most similar to the skin color region is selected after the original color data of the pixels in the skin color region is counted, the target color data is determined according to the original color data, the original mean value, the original standard deviation, and the preset mean value and the preset standard deviation of the designated skin color model, and the skin color region is adjusted according to the target color data. When the skin color region is adjusted on the basis of the designated skin color model, the difference between the adjusted skin color and the actual skin color is decreased, image distortion is avoided, the beautification effect is improved, the user does not need to select a target color, and thus the operation is simple and convenient; moreover, the algorithm is simple and easy to implement.

It is to be understood that both the foregoing general description and the following detailed description are exemplary only and are not restrictive of the invention.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart showing a method for adjusting skin color, according to an exemplary embodiment;
Fig. 2 is a flow chart showing a method for adjusting skin color, according to an exemplary embodiment;
Fig. 3 is a block diagram showing a device for adjusting skin color, according to an exemplary embodiment;
Fig. 4 is a block diagram showing a device for adjusting skin color, according to an exemplary embodiment; and
Fig. 5 is a block diagram showing another device for adjusting skin color, according to an exemplary embodiment.

## DETAILED DESCRIPTION

In order to make the objectives, technical solutions and advantages of the present disclosure more apparent, the embodiments of the present disclosure will be described in further detail with reference to the accompany drawings. Herein, the exemplary embodiments and explanations thereof in the present disclosure are only for interpreting the present disclosure, but are not for restricting the present disclosure.

Embodiments of the present disclosure provide a method and a device for adjusting skin color, and the present disclosure will be further explained in details with reference to the accompanying drawings hereinafter.

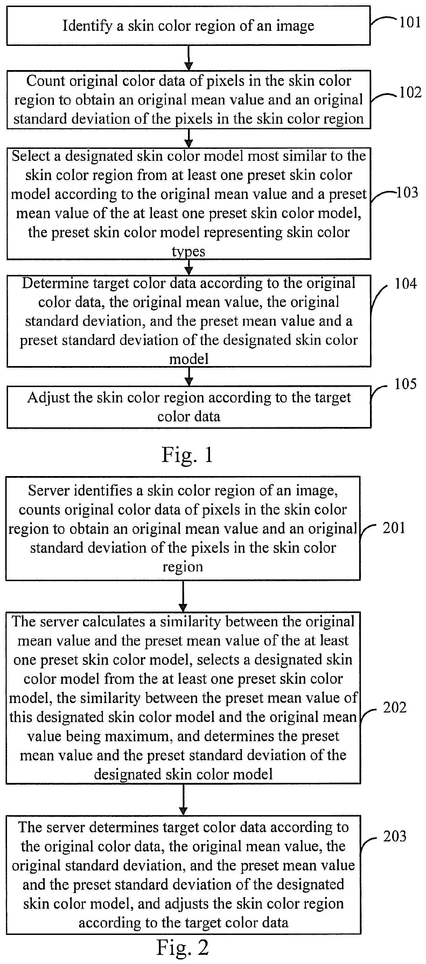

Fig. 1 is a flow chart showing a method for adjusting skin color, according to an exemplary embodiment. Referring to Fig. 1, the method includes the following steps.

In step 101, a skin color region of an image is identified.

In step 102, original color data of pixels in the skin color region is counted to obtain an original mean value and an original standard deviation of the pixels in the skin color region.

In step 103, a designated skin color model most similar to the skin color region is selected from at least one preset skin color model according to the original mean value and a preset mean value of the at least one preset skin color model, the preset skin color model representing skin color types.

In step 104, target color data is determined according to the original color data, the original mean value, the original standard deviation, and the preset mean value and a preset standard deviation of the designated skin color model.

In step 105, the skin color region is adjusted according to the target color data.

According to the method provided by the embodiment, the designated skin color model most similar to the skin color region is selected after the original color data of the pixels in the skin color region is counted, the target color data is determined according to the original color data, the original mean value, the original standard deviation, and the preset mean value and the preset standard deviation of the designated skin color model, and the skin color region is adjusted according to the target color data. When the skin color region is adjusted on the basis of the designated skin color model, the difference between the adjusted skin color and the actual skin color is decreased, image distortion is avoided, the beautification effect is improved, the user does not need to select a target color, and thus the operation is simple and convenient; moreover, the algorithm is simple and easy to implement.

Optionally, the step of selecting the designated skin color model most similar to the skin color region from the at least one preset skin color model according to the original mean value and the preset mean value of the at least one preset skin color model includes:

calculating a difference between the original mean value and the preset mean value of the at least one preset skin color model; and
selecting the designated skin color model from the at least one preset skin color model, the difference between the preset mean value of this designated skin color model and the original mean value being minimum.

Optionally, the step of selecting the designated skin color model most similar to the skin color region from the at least one preset skin color model according to the original mean value and the preset mean value of the at least one preset skin color model includes:

calculating an Euclidean distance between the original mean value and the at least one preset mean value; and
selecting the designated skin color model from the at least one preset skin color model, the Euclidean distance between the preset mean value of this designated skin color model and the original mean value being minimum.

Optionally, the color data is YUV data, and the step of determining the target color data according to the original color data, the original mean value, the original standard deviation, and the preset mean value and the preset standard deviation of the designated skin color model includes:

with respect to each pixel in the skin color region, determining the target color data of the pixel according to the original color data, the original mean value, and the original standard deviation of the pixel, and the preset mean value and the preset standard deviation of the designated skin color model by applying formulas as follows:

$$Y^{*} = meanY_{iType} + \frac{deltaY_{iType} * (Y - meanY)}{deltaY};$$

$$U^{*} = meanU_{iType} + \frac{deltaU_{iType} * (U - meanU)}{deltaU};$$

$$V^{*} = meanV_{iType} + \frac{deltaV_{iType} * (V - meanV)}{deltaV};$$

wherein $\overline{(Y^{*},U^{*},V^{*})}$ is the original color data of the pixel, $Y$ is a value of the original color data on a dimension Y in a YUV space, $U$ is a value of the original color data on a dimension U in the YUV space, and $V$ is a value of the original color data on a dimension V in the YUV space;
$\overline{(Y^{*},U^{*},V^{*})}$ is the target color data of the pixel, $Y^{*}$ is a value of the target color data on the dimension Y in the YUV space, $U^{*}$ is a value of the target color data on the dimension U in the YUV space, and $V^{*}$ is a value of the target color data on the dimension V in the YUV space;
$\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space;
$\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space;
$\overline{(meanY_{iType},meanU_{iType},meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; and

$\overline{(deltaY_{iType}, deltaU_{iType}, deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

Optionally, the step of adjusting the skin color region according to the target color data includes: adjusting the original color data of each pixel in the skin color region to be the target color data of each pixel.

Optionally, the at least one preset skin color model includes a first preset skin color model, a second preset skin color model, a third preset skin color model, a fourth preset skin color model, a fifth preset skin color model and a sixth preset skin color model;

a preset mean value and a preset standard deviation of the first preset skin color model are obtained by counting color data of sample images of light white people;

a preset mean value and a preset standard deviation of the second preset skin color model are obtained by counting color data of sample images of dark white people;

a preset mean value and a preset standard deviation of the third preset skin color model are obtained by counting color data of sample images of light yellow people;

a preset mean value and a preset standard deviation of the fourth preset skin color model are obtained by counting color data of sample images of dark yellow people;

a preset mean value and a preset standard deviation of the fifth preset skin color model are obtained by counting color data of sample images of light black people; and

a preset mean value and a preset standard deviation of the sixth preset skin color model are obtained by counting color data of sample images of dark black people.

Any combination of all the above-mentioned optional technical solutions may be employed to form optional embodiments of the present invention, which will not be elaborated one by one herein.

In an embodiment, Fig. 2 is an exemplary flow chart showing a method for adjusting skin color. Referring to Fig. 2, the method for adjusting skin color is used in a server, including the following steps.

In step 201, the server identifies a skin color region of an image, and counts original color data of pixels in the skin color region to obtain an original mean value and an original standard deviation of the pixels in the skin color region.

From the view of the image source, the image may either be an image captured by a terminal and uploaded to the server, or an image transmitted by other servers to the server; and from the view of the image contents, the image includes the skin color region, and more particularly, may include a face region, or include an entire-body region and the like, which are not restricted in the embodiment. When the terminal captures the image, the terminal may automatically upload the image to the server, then the server adjusts the skin color of the image and transmits the adjusted image to the terminal, and then the terminal directly displays the adjusted image; or, the terminal displays the captured image, when the user triggers an instruction for adjusting the skin color of the image, the terminal uploads the image to the server, then the server adjusts the skin color of the image and transmits the adjusted image to the terminal, and then the terminal displays the adjusted image, which are not restricted in the embodiment as well.

Optionally, the server employs a skin color detection algorithm to identify the image, selects the sample pixels of the image according to a skin color detection operator, performs color modeling on the skin color by using a Gaussian mixture model, and using the established color model to classify the skin color region and non-skin color region in the image to obtain the skin color region of the image. The server may identify a plurality of skin color regions of the image, for example, a forehead skin color region, a cheek skin color region, a nosewing skin color region and the like in the face image, and the server respectively adjusts the skin color of each skin color region. In the embodiment, only one skin color region of the image is taken as an example for explanation.

In the embodiment, the sever may select a plurality of sample pixels in the skin color region, acquire original color data of each sample pixel, and count the original color data of the plurality of sample pixels to obtain a mean value and a standard deviation of the original color data of the plurality of sample pixels as the original mean value and the original standard deviation of the pixels in the skin color region.

Taking the original color data which is YUV data as an example, the original mean value acquired by the server is $\overline{(meanY, meanU, meanV)}$, and the original standard deviation acquired by the server is $\overline{(deltaY, deltaU, deltaV)}$. In the three dimensional spaces of the YUV, a detection result of the skin color region is an ellipsoid, the original mean value is the center of the ellipsoid, and the three elements in the original standard deviation are three spherical radiuses of the ellipsoid.

In step 202, the server calculates a similarity between the original mean value and the preset mean value of the at least one preset skin color model, selects a designated skin color model from the at least one preset skin color model, the similarity between the preset mean value of this designated skin color model and the original mean value being maximum, and determines the preset mean value and the preset standard deviation of the designated skin color model.

In the embodiment, in order to improve the accuracy of adjusting skin color, the server establishes the at least one preset skin color model in advance to obtain the preset mean value and the preset standard deviation of the at least one preset skin color model. Each preset skin color model represents one skin color type. The server may determine a designated skin color type most similar to the skin color region according to the similarity between the original mean value and the preset mean value of the at least one preset skin color model. When the skin color is adjusted on the basis of the designated skin color type, the difference between the adjusted skin color and the actual skin color may be decreased, and image distortion may be avoided.

Accordingly, before step 202, the method further includes: establishing the at least one preset skin color model by the server. Particularly, the server selects sample images of different skin color types; with respect to each skin color type, the server performs training, counting and modeling on the color data of a plurality of sample images belonging to the skin color type to obtain a preset skin color model corresponding to the skin color type as well as a mean value and a standard deviation of the preset skin color model as a preset mean value and a preset standard deviation of the preset skin color model. The process of counting each sample image is similar to step 201, which will not be elaborated herein. In the three dimensional spaces of the YUV, the preset skin color model is an ellipsoid, the preset mean value is the center of the ellipsoid, and the three elements in the preset standard deviation are three spherical radiuses of the ellipsoid.

Further, the server may perform offline counting on the color data of the plurality of sample images; that is, when the preset mean value and the preset standard deviation of the preset skin color model are acquired, the color data of the sample images is deleted so as to save storage space.

The requirements for selecting the sample images are as follows: the skin color region in the sample image is clear and beautiful so as to ensure that when the skin color of the skin color region is subsequently adjusted on the basis of the designated skin color model, the adjusted skin color region cannot distort, and can meet the beautification demand of the user.

Optionally, human skin color types is divided into light white people, dark white people, light yellow people, dark yellow people, light black people, and dark black people. The server respectively counts according to the sample images belonging to the foregoing six skin color types to establish six preset skin color models: a first preset skin color model, a second preset skin color model, a third preset skin color model, a fourth preset skin color model, a fifth preset skin color model and a sixth preset skin color model. A preset mean value and a preset standard deviation of the first preset skin color model are obtained by counting color data of sample images of light white people. A preset mean value and a preset standard deviation of the second preset skin color model are obtained by counting color data of sample images of dark white people. A preset mean value and a preset standard deviation of the third preset skin color model are obtained by counting color data of sample images of light yellow people. A preset mean value and a preset standard deviation of the fourth preset skin color model are obtained by counting color data of sample images of dark yellow people. A preset mean value and a preset standard deviation of the fifth preset skin color model are obtained by counting color data of sample images of light black people. A preset mean value and a preset standard deviation of the sixth preset skin color model are obtained by counting color data of sample images of dark black people.

In the embodiment, the server calculates a similarity between the original mean value and the at least one preset skin color model. The larger similarity indicates that the skin color region is more similar to the corresponding preset skin color model, then the server selects from the at least one preset skin color model, a preset skin color model having a preset mean value which has a largest similarity with the original mean value, as the designated skin color model, wherein the designated skin color model is namely the skin color model most similar to the skin color region. For example, when the skin color region is a skin color region of light yellow people, the server calculates the similarity between the original mean value and at least one preset mean value, and determines that the similarity between the preset mean value of the third preset skin color model and the original mean value is the largest, then the third preset skin color model is used as the designated skin color model, and the skin color of the skin color region is adjusted on the basis of the third preset skin color model.

Optionally, the server calculates an Euclidean distance between the original mean value and the at least one preset skin color model. The smaller Euclidean distance indicates that the skin color region is more similar to the corresponding preset skin color model, then a designated skin color model having a preset mean value which has a smallest Euclidean distance with the original mean value is selected from the at least one preset skin color model. That is, the designated skin color model is determined by applying a formula as follows:

$$iType = \arg\min_{i}(dist((\overline{meanY, meanU, meanV}), (\overline{meanY_i, meanU_i, meanV_i})));$$

wherein $(\overline{meanY, meanU, meanV})$ is the original mean value, $(\overline{meanY_i, meanU_i, meanV_i})$ is a preset mean value of an ith preset skin color model, $i$=1, 2...$n$, $n$ is a number of the preset skin color models, $dist(\vec{a},\vec{b})$ b) is the Euclidean distance between two vectors $\vec{a}$ and $\vec{b}$, *iType* is the designated skin color model, and the Euclidean distance between the preset mean value of the designated skin color model and the original mean value is minimum.

Alternatively, the server calculates a cosine similarity between the original mean value and the at least one preset skin color model. The larger cosine similarity indicates that the skin color region is more similar to the corresponding preset skin color model. Then a designated skin color model having a preset mean value which has a maximum cosine similarity with the original mean value is selected from the at least one preset skin color model. The type of the similarity is not restricted in the embodiment.

In another embodiment provided by the embodiment, the server may also calculate a difference between the original mean value and the at least one preset skin color model. The smaller difference indicates that the skin color region is more similar to the corresponding preset skin color model. Then a designated skin color model having a preset mean value which has a minimum difference with the original mean value is selected from the at least one preset skin color model.

In step 203, the server determines target color data according to the original color data, the original mean value, the original standard deviation, and the preset mean value and the preset standard deviation of the designated skin color model, and adjusts the skin color region according to the target color data.

Optionally, the original color data is YUV data, and with respect to each pixel in the skin color region, the server determines the target color data of the pixel according to the original color data, the original mean value, and the original standard deviation of the pixel, and the preset mean value and the preset standard deviation of the designated skin color model by applying formulas as follows:

$$\frac{Y - meanY}{deltaY} = \frac{Y^* - meanY_{iType}}{deltaY_{iType}} ;$$

$$\frac{U - meanU}{deltaU} = \frac{U^* - meanU_{iType}}{deltaU_{iType}} ;$$

$$\frac{V - meanV}{deltaV} = \frac{V^* - meanV_{iType}}{deltaV_{iType}} ;$$

wherein $\overline{(Y,U,V)}$ is the original color data of the pixel, $Y$ is a value of the original color data on a dimension Y in a YUV space, $U$ is a value of the original color data on a dimension U in the YUV space, and $V$ is a value of the original color data on a dimension V in the YUV space; $\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space; $\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space; $\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space; $\overline{(meanY_{iType},meanU_{iType},meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; $\overline{(deltaY_{iType},deltaU_{iType},deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

Alternatively, the server may obtain the following formulas according to the foregoing formulas, and determines the target color data of the pixel by applying the following formulas:

$$Y^* = meanY_{iType} + \frac{deltaY_{iType} * (Y - meanY)}{deltaY} \ ;$$

$$U^* = meanU_{iType} + \frac{deltaU_{iType} * (U - meanU)}{deltaU} \ ;$$

$$V^* = meanV_{iType} + \frac{deltaV_{iType} * (V - meanV)}{deltaV} \ .$$

After determining the target color data of each pixel in the skin color region, the server adjusts the original color data of each pixel to be the corresponding target color data, thus implementing the skin color adjustment.

According to the embodiment, the original color data of the pixels in the skin color region is counted, the designated skin color model most similar to the skin color region is intelligently selected from the at least one preset skin color model according to the similarity of the skin color model, and the skin color is adjusted on the basis of the designated skin color model; therefore, the difference between the adjusted skin color and the actual skin color is decreased, and image distortion is avoided; moreover, the algorithm is simple and is easy to implement.

It should be noted that the embodiment is illustrated by taking the server as an executive body. In practice, the executive body may also be a terminal. The terminal downloads the preset mean value and the preset standard deviation of at least one preset skin color model established by the server. When the terminal captures an image, the terminal applies the method provided by the embodiment to adjust the skin color of the skin color region of the image. The executive body is not restricted in the embodiment.

According to the method provided by the embodiment, the designated skin color model most similar to the skin color region is selected after the original color data of the pixels in the skin color region is counted, the target color data is determined according to the original color data, the original mean value, the original standard deviation, and the preset mean value and the preset standard deviation of the designated skin color model, and the skin color region is adjusted according to the target color data. When the skin color region is adjusted on the basis of the designated skin color model, the difference between the adjusted skin color and the actual skin color is decreased, image distortion is avoided, the beautification effect is improved, the user does not need to select a target color, and the operation is simple and convenient; moreover, the algorithm is simple and easy to implement.

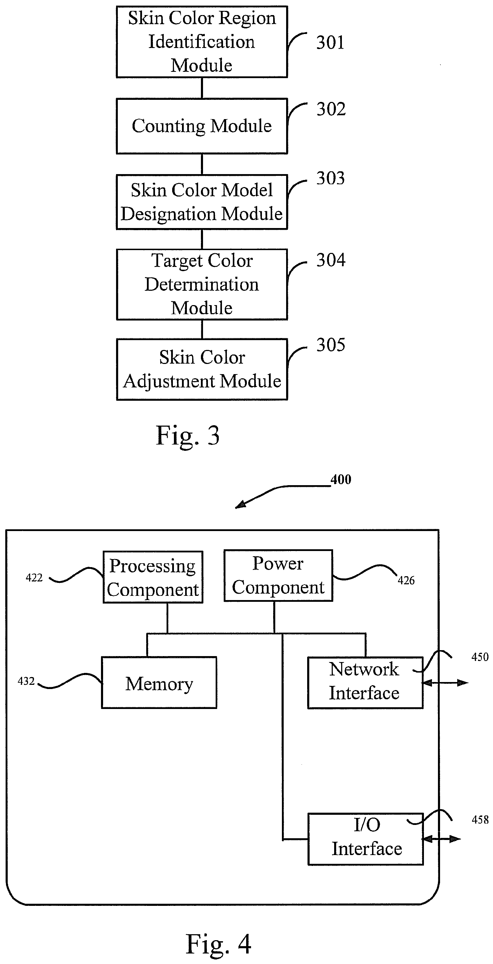

Fig. 3 is a block diagram showing a device for adjusting skin color, according to an exemplary embodiment. Referring to Fig. 3, the device includes a skin color region identification module 301, a counting module 302, a skin color model designation module 303, a target color determination module 304 and a skin color adjustment module 305.

The skin color region identification module 301 is configured to identify a skin color region of an image.

The counting module 302 is configured to count original color data of pixels in the skin color region to obtain an original mean value and an original standard deviation of the pixels in the skin color region.

The skin color model designation module 303 is configured to select a designated skin color model most similar to the skin color region from at least one preset skin color model according to the original mean value and a preset mean value of the at least one preset skin color model, the preset skin color model representing skin color types.

The target color determination module 304 is configured to determine target color data according to the original color data, the original mean value, the original standard deviation, and the preset mean value and a preset standard deviation of the designated skin color model.

The skin color adjustment module 305 is configured to adjust the skin color region according to the target color data.

Optionally, the skin color model designation module 303 includes:

a similarity calculation unit configured to calculate a difference between the original mean value and a preset mean value of the at least one preset skin color model; and

a skin color model selection unit configured to select the designated skin color model from the at least one preset skin color model, the difference between the preset mean value of this designated skin color model and the original mean value being minimum.

Optionally, the skin color model designation module 303 includes:

an Euclidean distance calculation unit configured to calculate an Euclidean distance between the original mean value and the at least one preset mean value; and

the skin color model selection unit further configured to select the designated skin color model from the at least one preset skin color model, the Euclidean distance between the preset mean value of this designated skin color model and the original mean value being minimum.

Optionally, the color data is YUV data, and the target color determination module 304 is configured to, with respect to each pixel in the skin color region, determine the target color data of the pixel according to the original color data, the original mean value, and the original standard deviation of the pixel, and the preset mean value and the preset standard deviation of the designated skin color model by applying formulas as follows:

$$Y^* = meanY_{iType} + \frac{deltaY_{iType} * (Y - meanY)}{deltaY} ;$$

$$U^* = meanU_{iType} + \frac{deltaU_{iType} * (U - meanU)}{deltaU} ;$$

$$V^* = meanV_{iType} + \frac{deltaV_{iType} * (V - meanV)}{deltaV} ;$$

wherein $\overline{(Y,U,V)}$ is the original color data of the pixel, $Y$ is a value of the original color data on a dimension Y in a YUV space, $U$ is a value of the original color data on a dimension U in the YUV space, and $V$ is a value of the original color data on a dimension V in the YUV space;

$\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space;

$\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space;

$\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space;

$\overline{(meanY_{iType},meanU_{iType},meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; and

$\overline{(deltaY_{iType},deltaU_{iType},deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

Optionally, the skin color adjustment module 305 includes:

a skin color adjustment unit configured to adjust the original color data of each pixel in the skin color region to be the target color data of each pixel.

Optionally, the device further includes:

a skin color model preset module configured to set the at least one preset skin color model, the at least one preset skin color model including a first preset skin color model, a second preset skin color model, a third preset skin color model, a fourth preset skin color model, a fifth preset skin color model and a sixth preset skin color model;

a preset mean value and a preset standard deviation of the first preset skin color model are obtained by counting color data of sample images of light white people;

a preset mean value and a preset standard deviation of the second preset skin color model are obtained by counting color data of sample images of dark white people;

a preset mean value and a preset standard deviation of the third preset skin color model are obtained by counting color data of sample images of light yellow people;

a preset mean value and a preset standard deviation of the fourth preset skin color model are obtained by counting color data of sample images of dark yellow people;

a preset mean value and a preset standard deviation of the fifth preset skin color model are obtained by counting color data of sample images of light black people; and

a preset mean value and a preset standard deviation of the sixth preset skin color model are obtained by counting color data of sample images of dark black people.

Any combination of all the above-mentioned optional technical solutions may be employed to form optional embodiments of the present invention, which will not be elaborated one by one herein.

With respect to the devices in the above embodiments, the specific manners for performing operations for individual modules therein have been described in detail in the embodiments regarding the methods, which will not be elaborated herein.

It should be noted that: when the devices for adjusting skin color provided in the above embodiments are adjusting the skin color, it is only illustrated by taking the division of each functional module as an example. During practical application, the foregoing function distribution may be finished by different functional modules according to requirements. That is, the interior of the server is divided into different functional modules so as to finish all or part of the functions described above. Moreover, the device for adjusting skin color provided by the foregoing embodiment and the embodiment of the method for adjusting skin color belong to the same conception, and the detailed implementation process is as shown in the embodiment of the method, which will not be elaborated herein.

Fig. 4 is a block diagram showing a device 400 for adjusting skin color, according to an exemplary embodiment. For example, the device 400 may be provided as a server. Referring to Fig. 4, the device 400 includes a processing component 422 that further includes one or more processors, and memory resources represented by a memory 432 for storing instructions executable by the processing component 422, such as application programs. The application programs stored in the memory 432 may include one or more modules each corresponding to a set of instructions. Further, the processing component 422 is configured to execute the instructions to perform the above method for adjusting skin color.

The device 400 may also include a power component 426 configured to perform power management of the device 400, wired or wireless network interface(s) 450 configured to connect the device 400 to a network, and an input/output (I/O) interface 458. The device 400 may operate based on an operating system stored in the memory 432, such as Windows ServerTM, Mac OS XTM, UnixTM, LinuxTM, FreeBSDTM, or the like.

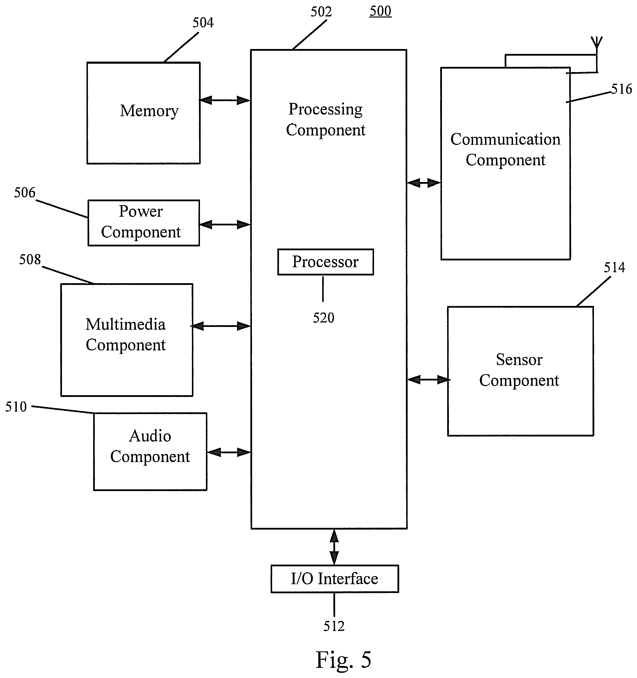

Fig. 5 is a block diagram showing another device 500 for adjusting skin color, according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when an instruction in a storage medium is performed by a processor of a mobile terminal, enables the mobile terminal to perform a method for adjusting skin color, wherein the method includes:

identifying a skin color region of an image;
counting original color data of pixels in the skin color region to obtain an original mean value and an original standard deviation of the pixels in the skin color region;
selecting a designated skin color model most similar to the skin color region from at least one preset skin color model according to the original mean value and a preset mean value of the at least one preset skin color model, the preset skin color model representing skin color types;
determining target color data according to the original color data, the original mean value, the original standard deviation, and the preset mean value and a preset standard deviation of the designated skin color model; and
adjusting the skin color region according to the target color data.

Optionally, the step of selecting the designated skin color model most similar to the skin color region from the at least one preset skin color model according to the original mean value and the preset mean value of the at least one preset skin color model includes:

calculating a difference between the original mean value and the preset mean value of the at least one preset skin color model; and

selecting the designated skin color model from the at least one preset skin color model, the difference between the preset mean value of this designated skin color model and the original mean value being minimum.

Optionally, the step of selecting the designated skin color model most similar to the skin color region from the at least one preset skin color model according to the original mean value and the preset mean value of the at least one preset skin color model includes:

calculating an Euclidean distance between the original mean value and the at least one preset mean value; and selecting the designated skin color model from the at least one preset skin color model, the Euclidean distance between the preset mean value of this designated skin color model and the original mean value being minimum.

Optionally, the color data is YUV data, and the step of determining the target color data according to the original color data, the original mean value, the original standard deviation, and the preset mean value and the preset standard deviation of the designated skin color model includes:

with respect to each pixel in the skin color region, determining the target color data of the pixel according to the original color data, the original mean value, and the original standard deviation of the pixel, and the preset mean value and the preset standard deviation of the designated skin color model by applying formulas as follows:

$$Y^* = meanY_{iType} + \frac{deltaY_{iType} * (Y - meanY)}{deltaY};$$

$$U^* = meanU_{iType} + \frac{deltaU_{iType} * (U - meanU)}{deltaU};$$

$$V^* = meanV_{iType} + \frac{deltaV_{iType} * (V - meanV)}{deltaV};$$

wherein $\overline{(Y,U,V)}$ is the original color data of the pixel, $Y$ is a value of the original color data on a dimension Y in a YUV space, $U$ is a value of the original color data on a dimension U in the YUV space, and $V$ is a value of the original color data on a dimension V in the YUV space;
$\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space;
$\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space;
$\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space;
$\overline{(meanY_{iType}, meanU_{iType}, meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; and
$\overline{(deltaY_{iType}, deltaU_{iType}, deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

Optionally, the step of adjusting the skin color region according to the target color data includes:

adjusting the original color data of each pixel in the skin color region to be the target color data of each pixel.

Optionally, the at least one preset skin color model includes a first preset skin color model, a second preset skin color model, a third preset skin color model, a fourth preset skin color model, a fifth preset skin color model and a sixth preset skin color model;

a preset mean value and a preset standard deviation of the first preset skin color model are obtained by counting color data of sample images of light white people;

a preset mean value and a preset standard deviation of the second preset skin color model are obtained by counting color data of sample images of dark white people;

a preset mean value and a preset standard deviation of the third preset skin color model are obtained by counting color data of sample images of light yellow people;

a preset mean value and a preset standard deviation of the fourth preset skin color model are obtained by counting color data of sample images of dark yellow people;

a preset mean value and a preset standard deviation of the fifth preset skin color model are obtained by counting color data of sample images of light black people;

a preset mean value and a preset standard deviation of the sixth preset skin color model are obtained by counting color data of sample images of dark black people.

Any combination of all the above-mentioned optional technical solutions may be employed to form optional embodiments of the present invention, which will not be elaborated one by one herein.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

**Claims**

1. A method for adjusting skin color, the method comprising:

    Identifying (101) a skin color region of an image;
    counting (102) original color data of pixels in the skin color region to obtain an original mean value and an original standard deviation of the pixels in the skin color region;
    selecting (103) a designated skin color model most similar to the skin color region from a plurality of preset skin color models according to the original mean value and preset mean values of the preset skin color models, the preset skin color models representing skin color types;
    determining (104) target color data according to the original color data, the original mean value, the original standard deviation, and the preset mean value and a preset standard deviation of the designated skin color model; and
    adjusting (105) the skin color region according to the target color data.

2. The method according to claim 1, wherein the step of selecting the designated skin color model most similar to the skin color region from the plurality of skin color models comprises:

    calculating a difference between the original mean value and the preset mean values of the plurality of skin color models; and
    selecting the designated skin color model from the plurality of skin color models, the difference between the preset mean value of this designated skin color model and the original mean value being minimum.

3. The method according to claim 1, wherein the step of selecting the designated skin color model most similar to the skin color region from the plurality of skin color models comprises:

    calculating an Euclidean distance between the original mean value and the plurality of preset mean values; and
    selecting the designated skin color model from the pluraliy of preset skin color models, the Euclidean distance between the preset mean value of this designated skin color model and the original mean value being minimum.

4. The method according to any one of claims 1 to 3, wherein the color data is YUV data, and the step of determining the target color data according to the original color data, the original mean value, the original standard deviation, and the preset mean value and the preset standard deviation of the designated skin color model comprises:
with respect to each pixel in the skin color region, determining the target color data of the pixel according to the original color data, the original mean value, and the original standard deviation of the pixel, and the preset mean value and the preset standard deviation of the designated skin color model by applying formulas as follows:

$$Y^* = meanY_{iType} + \frac{deltaY_{iType} * (Y - meanY)}{deltaY};$$

$$U^* = meanU_{iType} + \frac{deltaU_{iType} * (U - meanU)}{deltaU};$$

$$V^* = meanV_{iType} + \frac{deltaV_{iType} * (V - meanV)}{deltaV};$$

wherein $\overline{(Y,U,V)}$ is the original color data of the pixel, $Y$ is a value of the original color data on a dimension Y in a YUV space, U is a value of the original color data on a dimension U in the YUV space, and $V$ is a value of the original color data on a dimension V in the YUV space;
$\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space;
$\overline{(meanY,meanU,meanV)}$ is the original mean value, $meanY$ is a value of the original mean value on the dimension Y in the YUV space, $meanU$ is a value of the original mean value on the dimension U in the YUV space, and $meanV$ is a value of the original mean value on the dimension V in the YUV space;
$\overline{(deltaY,deltaU,deltaV)}$ is the original standard deviation, $deltaY$ is a value of the original standard deviation on the dimension Y in the YUV space, $deltaU$ is a value of the original standard deviation on the dimension U in the YUV space, and $deltaV$ is a value of the original standard deviation on the dimension V in the YUV space;
$\overline{(meanY_{iType},meanU_{iType},meanV_{iType})}$ is the preset mean value of the designated skin color model, $meanY_{iType}$ is a value of the preset mean value on the dimension Y in the YUV space, $mean U_{iType}$ is a value of the preset mean value on the dimension U in the YUV space, and $meanV_{iType}$ is a value of the preset mean value on the dimension V in the YUV space; and
$\overline{(deltaY_{iType},deltaU_{iType},deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

5. The method according to claim 4, wherein the step of adjusting the skin color region according to the target color data comprises:
adjusting the original color data of each pixel in the skin color region to be the target color data of each pixel.

6. The method according to any one of claims 1 to 5, wherein the plurality of preset skin color models includes a first preset skin color model, a second preset skin color model, a third preset skin color model, a fourth preset skin color model, a fifth preset skin color model and a sixth preset skin color model;
a preset mean value and a preset standard deviation of the first preset skin color model are obtained by counting color data of sample images of light white people;
a preset mean value and a preset standard deviation of the second preset skin color model are obtained by counting color data of sample images of dark white people;
a preset mean value and a preset standard deviation of the third preset skin color model are obtained by counting color data of sample images of light yellow people;
a preset mean value and a preset standard deviation of the fourth preset skin color model are obtained by counting color data of sample images of dark yellow people;
a preset mean value and a preset standard deviation of the fifth preset skin color model are obtained by counting color data of sample images of light black people; and

a preset mean value and a preset standard deviation of the sixth preset skin color model are obtained by counting color data of sample images of dark black people.

7. A device for adjusting skin color, the device comprising:

a skin color region identification module (301) configured to identify a skin color region of an image;
a counting module (302) configured to count original color data of pixels in the skin color region to obtain an original mean value and an original standard deviation of the pixels in the skin color region;
a skin color model designation module (303) configured to select a designated skin color model most similar to the skin color region from a plurality of preset skin color models according to the original mean value and preset mean values of the preset skin color models, the preset skin color models representing skin color types;
a target color determination module (304) configured to determine target color data according to the original color data, the original mean value, the original standard deviation, and the preset mean value and a preset standard deviation of the designated skin color model; and
a skin color adjustment module (305) configured to adjust the skin color region according to the target color data.

8. The device according to claim 7, wherein the skin color model designation module comprises:

a similarity calculation unit configured to calculate a difference between the original mean value and the plurality of preset skin color models; and
a skin color model selection unit configured to select the designated skin color model from the plurality of preset skin color models, the difference between the preset mean value of this designated skin color model and the original mean value being minimum.

9. The device according to claim 7, wherein the skin color model designation module comprises:

an Euclidean distance calculation unit configured to calculate an Euclidean distance between the original mean value and the preset mean values; and
a skin color model selection unit configured to select the designated skin color model from the preset skin color models, the Euclidean distance between the preset mean value of this designated skin color model and the original mean value being minimum.

10. The device according to any one of claims 7 to 9, wherein the device employs YUV data as the color data; the target color determination module is configured to, with respect to each pixel in the skin color region, determine the target color data of the pixel according to the original color data, the original mean value, and the original standard deviation of the pixel, and the preset mean value and the preset standard deviation of the designated skin color model by applying formulas as follows:

$$Y^* = meanY_{iType} + \frac{deltaY_{iType} * (Y - meanY)}{deltaY};$$

$$U^* = meanU_{iType} + \frac{deltaU_{iType} * (U - meanU)}{deltaU};$$

$$V^* = meanV_{iType} + \frac{deltaV_{iType} * (V - meanV)}{deltaV};$$

wherein $\overline{(Y,U,V)}$ is the original color data of the pixel, $Y$ is a value of the original color data on a dimension Y in a YUV space, $U$ is a value of the original color data on a dimension U in the YUV space, and $V$ is a value of the original color data on a dimension V in the YUV space;
$\overline{(Y^*,U^*,V^*)}$ is the target color data of the pixel, $Y^*$ is a value of the target color data on the dimension Y in the YUV space, $U^*$ is a value of the target color data on the dimension U in the YUV space, and $V^*$ is a value of the target color data on the dimension V in the YUV space;
$\overline{(meanY,meanU,meanV)}$ is the original mean value, $meanY$ is a value of the original mean value on the dimension Y in the YUV space, $meanU$ is a value of the original mean value on the dimension U in the YUV space, and *meanV* is a value of the original mean value on the dimension V in the YUV space;

$\overline{(deltaY, deltaU, deltaV)}$ is the original standard deviation, *deltaY* is a value of the original standard deviation on the dimension Y in the YUV space, *deltaU* is a value of the original standard deviation on the dimension U in the YUV space, and *deltaV* is a value of the original standard deviation on the dimension V in the YUV space;

$\overline{(meanY_{iType}, meanU_{iType}, meanV_{iType})}$ is the preset mean value of the designated skin color model, $meanY_{iType}$ is a value of the preset mean value on the dimension Y in the YUV space, $meanU_{iType}$ is a value of the preset mean value on the dimension U in the YUV space, and $meanV_{iType}$ is a value of the preset mean value on the dimension V in the YUV space; and

$\overline{(deltaY_{iType}, deltaU_{iType}, deltaV_{iType})}$ is the preset standard deviation of the designated skin color model, $deltaY_{iType}$ is a value of the preset standard deviation on the dimension Y in the YUV space, $deltaU_{iType}$ is a value of the preset standard deviation on the dimension U in the YUV space, and $deltaV_{iType}$ is a value of the preset standard deviation on the dimension V in the YUV space.

11. The device according to claim 10, wherein the skin color adjustment module comprises:
a skin color adjustment unit configured to adjust the original color data of each pixel in the skin color region to be the target color data of each pixel.

12. The device according to any one of claims 7 to 11, wherein the device further comprises:

a skin color model preset module configured to set the plurality of preset skin color models, the models comprising a first preset skin color model, a second preset skin color model, a third preset skin color model, a fourth preset skin color model, a fifth preset skin color model and a sixth preset skin color model;
a preset mean value and a preset standard deviation of the first preset skin color model are obtained by counting color data of sample images of light white people;
a preset mean value and a preset standard deviation of the second preset skin color model are obtained by counting color data of sample images of dark white people;
a preset mean value and a preset standard deviation of the third preset skin color model are obtained by counting color data of sample images of light yellow people;
a preset mean value and a preset standard deviation of the fourth preset skin color model are obtained by counting color data of sample images of dark yellow people;
a preset mean value and a preset standard deviation of the fifth preset skin color model are obtained by counting color data of sample images of light black people; and
a preset mean value and a preset standard deviation of the sixth preset skin color model are obtained by counting color data of sample images of dark black people.

13. A device (400) for adjusting skin color, the device comprising:

a processor (422); and
a memory (432) for storing instructions executable by the processor;
wherein the processor is configured to:

identify a skin color region of an image;
count original color data of pixels in the skin color region to obtain an original mean value and an original standard deviation of the pixels in the skin color region;
select a designated skin color model most similar to the skin color region from a plurality of preset skin color models according to the original mean value and a preset mean value of the preset skin color models, the preset skin color models representing skin color types;
determine target color data according to the original color data, the original mean value, the original standard deviation, and the preset mean value and a preset standard deviation of the designated skin color model; and
adjust the skin color region according to the target color data.

14. A computer program including instructions for executing the steps of a method for adjusting a skin color according to any one of claims 1 to 6 when said program is executed by a computer.

15. A recording medium readable by a computer and having recorded thereon a computer program including instructions for executing the steps of a method for adjusting a skin color according to any one of claims 1 to 6.

**Patentansprüche**

1. Verfahren zum Einstellen der Hautfarbe, wobei das Verfahren umfasst:

   Identifizieren (101) einer Hautfarbenregion eines Bilds,
   Erfassen (102) von ursprünglichen Farbendaten von Pixeln in der Hautfarbenregion, um einen ursprünglichen Mittelwert und eine ursprüngliche Standardabweichung der Pixel in der Hautfarbenregion zu erhalten,
   Auswählen (103) eines festgelegten Hautfarbenmodells, das der Hautfarbenregion am ähnlichsten ist, aus einer Vielzahl von voreingestellten Hautfarbenmodellen gemäß dem ursprünglichen Mittelwert und voreingestellten Mittelwerten der voreingestellten Hautfarbenmodelle, wobei die voreingestellten Hautfarbenmodelle Hautfarbentypen darstellen,
   Bestimmen (104) von Zielfarbendaten gemäß den ursprünglichen Farbendaten, dem ursprünglichen Mittelwert, der ursprünglichen Standardabweichung und dem voreingestellten Mittelwert und einer voreingestellten Standardabweichung des festgelegten Hautfarbenmodells, und
   Einstellen (105) der Hautfarbenregion gemäß den Zielfarbendaten.

2. Verfahren nach Anspruch 1, wobei der Schritt des Auswählens des festgelegten Hautfarbenmodells, das der Hautfarbenregion am ähnlichsten ist, aus der Vielzahl von Hautfarbenmodellen umfasst:

   Berechnen einer Differenz zwischen dem ursprünglichen Mittelwert und den voreingestellten Mittelwerten von der Vielzahl von Hautfarbenmodellen und
   Auswählen des festgelegten Hautfarbenmodells aus der Vielzahl von Hautfarbenmodellen, wobei die Differenz zwischen dem voreingestellten Mittelwert von diesem festgelegten Hautfarbenmodell und dem ursprünglichen Mittelwert minimal ist.

3. Verfahren nach Anspruch 1, wobei der Schritt des Auswählens des festgelegten Hautfarbenmodells, das der Hautfarbenregion am ähnlichsten ist, aus der Vielzahl von Hautfarbenmodellen umfasst:

   Berechnen eines euklidischen Abstands zwischen dem ursprünglichen Mittelwert und der Vielzahl von voreingestellten Mittelwerten und
   Auswählen des festgelegten Hautfarbenmodells aus der Vielzahl von voreingestellten Hautfarbenmodellen, wobei der euklidische Abstand zwischen dem voreingestellten Mittelwert von diesem festgelegten Hautfarbenmodell und dem ursprünglichen Mittelwert minimal ist.

4. Verfahren nach einem beliebigen der Ansprüche 1 bis 3, wobei es sich bei den Farbendaten um YUV-Daten handelt und der Schritt des Bestimmens der Zielfarbendaten gemäß den ursprünglichen Farbendaten, dem ursprünglichen Mittelwert, der ursprünglichen Standardabweichung und dem voreingestellten Mittelwert und der voreingestellten Standardabweichung des festgelegten Hautfarbenmodells umfasst:
   in Bezug auf jedes Pixel in der Hautfarbenregion, Bestimmen der Zielfarbendaten des Pixels gemäß den ursprünglichen Farbendaten, dem ursprünglichen Mittelwert und der ursprünglichen Standardabweichung des Pixels und dem voreingestellten Mittelwert und der voreingestellten Standardabweichung des festgelegten Hautfarbenmodells durch Anwenden der folgenden Formeln:

$$Y^* = meanY_{mType} + \frac{deltaY_{mType} * (Y - meanY)}{deltaY} \quad ,$$

$$U^* = meanU_{mType} + \frac{deltaU_{mType} * (U - meanU)}{deltaU} \quad ,$$

$$V^* = meanV_{mType} + \frac{deltaV_{mType} * (V - meanV)}{deltaV} \quad ,$$

wobei es sich bei $\overline{(Y,U,V)}$ um die ursprünglichen Farbendaten des Pixels handelt, es sich bei Y um einen Wert der ursprünglichen Farbendaten in einer Dimension Y in einem YUV-Raum handelt, es sich bei $U$ um einen Wert der ursprünglichen Farbendaten in einer Dimension U in dem YUV-Raum handelt und es sich bei $V$ um einen Wert der ursprünglichen Farbendaten in einer Dimension V in dem YUV-Raum handelt,

wobei es sich bei $\overline{(Y^*,U^*,V^*)}$ um die Zielfarbendaten des Pixels handelt, es sich bei $Y^*$ um einen Wert der Zielfarbendaten in der Dimension Y in einem YUV-Raum handelt, es sich bei $U^*$ um einen Wert der Zielfarbendaten in der Dimension U in dem YUV-Raum handelt und es sich bei $V^*$ um einen Wert der Zielfarbendaten in der Dimension V in dem YUV-Raum handelt,

wobei es sich bei $\overline{(meanY,meanU,meanV)}$ um den ursprünglichen Mittelwert handelt, es sich bei $meanY$ um einen Wert des ursprünglichen Mittelwerts in der Dimension Y in dem YUV-Raum handelt, es sich bei $meanU$ um einen Wert des ursprünglichen Mittelwerts in der Dimension U in dem YUV-Raum handelt und es sich bei $meanV$ um einen Wert des ursprünglichen Mittelwerts in der Dimension V in dem YUV-Raum handelt,

wobei es sich bei $\overline{(deltaY,deltaU,deltaV)}$ um die ursprüngliche Standardabweichung handelt, es sich bei $deltaY$ um einen Wert der ursprünglichen Standardabweichung in der Dimension Y in dem YUV-Raum handelt, es sich bei $deltaU$ um einen Wert der ursprünglichen Standardabweichung in der Dimension U in dem YUV-Raum handelt und es sich bei $deltaV$ um einen Wert der ursprünglichen Standardabweichung in der Dimension V in dem YUV-Raum handelt,

wobei es sich bei $\overline{(meanY_{iType},meanU_{iType},meanV_{iType})}$ um den voreingestellten Mittelwert des festgelegten Hautfarbenmodells handelt, es sich bei $meanY_{iType}$ um einen Wert des voreingestellten Mittelwerts in der Dimension Y in dem YUV-Raum handelt, es sich bei $meanU_{iType}$ um einen Wert des voreingestellten Mittelwerts in der Dimension U in dem YUV-Raum handelt und es sich bei $meanV_{iType}$ um einen Wert des voreingestellten Mittelwerts in der Dimension V in dem YUV-Raum handelt, und

wobei es sich bei $\overline{(deltaY_{iType},deltaU_{iType},deltaV_{iType})}$ um die voreingestellte Standardabweichung des festgelegten Hautfarbenmodells handelt, es sich bei $deltaY_{iType}$ um einen Wert der voreingestellten Standardabweichung in der Dimension Y in dem YUV-Raum handelt, es sich bei $deltaU_{iType}$ um einen Wert der voreingestellten Standardabweichung in der Dimension U in dem YUV-Raum handelt und es sich bei $deltaV_{iType}$ um einen Wert der voreingestellten Standardabweichung in der Dimension V in dem YUV-Raum handelt.

5. Verfahren nach Anspruch 4, wobei der Schritt des Einstellens der Hautfarbenregion gemäß den Zielfarbendaten umfasst:

Einstellen der ursprünglichen Farbendaten von jedem Pixel in der Hautfarbenregion derart, dass es sich um die Zielfarbendaten von jedem Pixel handelt.

6. Verfahren nach einem beliebigen der Ansprüche 1 bis 5, wobei

die Vielzahl von voreingestellten Hautfarbenmodellen ein erstes voreingestelltes Hautfarbenmodell, ein zweites voreingestelltes Hautfarbenmodell, ein drittes voreingestelltes Hautfarbenmodell, ein viertes voreingestelltes Hautfarbenmodell, ein fünftes voreingestelltes Hautfarbenmodell und ein sechstes voreingestelltes Hautfarbenmodell beinhaltet,

ein voreingestellter Mittelwert und eine voreingestellte Standardabweichung des ersten voreingestellten Hautfarbenmodells durch Erfassen von Farbendaten von Probenbildern von Menschen heller weißer Hautfarbe erhalten werden,

ein voreingestellter Mittelwert und eine voreingestellte Standardabweichung des zweiten voreingestellten Hautfarbenmodells durch Erfassen von Farbendaten von Probenbildern von Menschen dunkler weißer Hautfarbe erhalten werden,

ein voreingestellter Mittelwert und eine voreingestellte Standardabweichung des dritten voreingestellten Hautfarbenmodells durch Erfassen von Farbendaten von Probenbildern von Menschen heller gelber Hautfarbe erhalten werden,

ein voreingestellter Mittelwert und eine voreingestellte Standardabweichung des vierten voreingestellten Hautfarbenmodells durch Erfassen von Farbendaten von Probenbildern von Menschen dunkler gelber Hautfarbe erhalten werden,

ein voreingestellter Mittelwert und eine voreingestellte Standardabweichung des fünften voreingestellten Hautfarbenmodells durch Erfassen von Farbendaten von Probenbildern von Menschen heller schwarzer Hautfarbe erhalten werden, und

ein voreingestellter Mittelwert und eine voreingestellte Standardabweichung des sechsten voreingestellten Hautfarbenmodells durch Erfassen von Farbendaten von Probenbildern von Menschen dunkler schwarzer Hautfarbe erhalten werden.

7. Vorrichtung zum Einstellen der Hautfarbe, wobei die Vorrichtung umfasst:

ein Hautfarbenregion-Identifikationsmodul (301), das dazu ausgelegt ist, eine Hautfarbenregion eines Bilds zu identifizieren,

ein Erfassungsmodul (302), das dazu ausgestaltet ist, ursprüngliche Farbendaten von Pixeln in der Hautfarbenregion zu erfassen, um einen ursprünglichen Mittelwert und eine ursprüngliche Standardabweichung der Pixel in der Hautfarbenregion zu erhalten,

ein Hautfarbenmodell-Festlegungsmodul (303), das dazu ausgestaltet ist, ein festgelegtes Hautfarbenmodell, das der Hautfarbenregion am ähnlichsten ist, aus einer Vielzahl von voreingestellten Hautfarbenmodellen gemäß dem ursprünglichen Mittelwert und voreingestellten Mittelwerten der voreingestellten Hautfarbenmodelle auszuwählen, wobei die voreingestellten Hautfarbenmodelle Hautfarbentypen darstellen,

ein Zielfarbenbestimmungsmodul (304), das dazu ausgestaltet ist, Zielfarbendaten gemäß den ursprünglichen Farbendaten, dem ursprünglichen Mittelwert, der ursprünglichen Standardabweichung und dem voreingestellten Mittelwert und einer voreingestellten Standardabweichung des festgelegten Hautfarbenmodells zu bestimmen, und

ein Hautfarbeneinstellungsmodul (305), das dazu ausgestaltet ist, die Hautfarbenregion gemäß den Zielfarbendaten einzustellen.

8. Vorrichtung nach Anspruch 7, wobei das Hautfarbenmodell-Festlegungsmodul umfasst:

eine Ähnlichkeitsberechnungseinheit, die dazu ausgestaltet ist, eine Differenz zwischen dem ursprünglichen Mittelwert und der Vielzahl von voreingestellten Hautfarbenmodellen zu berechnen, und
eine Hautfarbenmodell-Auswahleinheit, die dazu ausgestaltet ist, das festgelegte Hautfarbenmodell aus der Vielzahl von voreingestellten Hautfarbenmodellen auszuwählen, wobei die Differenz zwischen dem voreingestellten Mittelwert dieses festgelegten Hautfarbenmodells und dem ursprünglichen Mittelwert minimal ist.

9. Vorrichtung nach Anspruch 7, wobei das Hautfarbenmodell-Festlegungsmodul umfasst:

eine Berechnungseinheit für den euklidischen Abstand, die dazu ausgestaltet ist, einen euklidischen Abstand zwischen dem ursprünglichen Mittelwert und den voreingestellten Mittelwerten zu berechnen, und
eine Hautfarbenmodell-Auswahleinheit, die dazu ausgestaltet ist, das festgelegte Hautfarbenmodell aus den voreingestellten Hautfarbenmodellen auszuwählen, wobei der euklidische Abstand zwischen dem voreingestellten Mittelwert dieses festgelegten Hautfarbenmodells und dem ursprünglichen Mittelwert minimal ist.

10. Vorrichtung nach einem beliebigen der Ansprüche 7 bis 9, wobei die Vorrichtung YUV-Daten als die Farbendaten verwendet, wobei das Zielfarbenbestimmungsmodul dazu ausgestaltet ist, in Bezug auf jedes Pixel in der Hautfarbenregion die Zielfarbendaten des Pixels gemäß den ursprünglichen Farbendaten, dem ursprünglichen Mittelwert und der ursprünglichen Standardabweichung des Pixels und dem voreingestellten Mittelwert und der voreingestellten Standardabweichung des festgelegten Hautfarbenmodells zu bestimmen, indem die folgenden Formeln angewendet werden:

$$Y^* = meanY_{iType} + \frac{deltaY_{iType} * (Y - meanY)}{deltaY} \quad ,$$

$$U^* = meanU_{iType} + \frac{deltaU_{iType} * (U - meanU)}{deltaU} \quad ,$$

$$V^* = meanV_{iType} + \frac{deltaV_{iType} * (V - meanV)}{deltaV} \quad ,$$

wobei es sich bei $\overline{(Y,U,V)}$ um die ursprünglichen Farbendaten des Pixels handelt, es sich bei $Y$ um einen Wert der ursprünglichen Farbendaten in einer Dimension Y in einem YUV-Raum handelt, es sich bei U um einen Wert der ursprünglichen Farbendaten in einer Dimension U in dem YUV-Raum handelt und es sich bei V um einen Wert der ursprünglichen Farbendaten in einer Dimension V in dem YUV-Raum handelt,
wobei es sich bei $\overline{(Y^*,U^*,V^*)}$ um die Zielfarbendaten des Pixels handelt, es sich bei $Y^*$ um einen Wert der Zielfarbendaten in der Dimension Y in einem YUV-Raum handelt, es sich bei $U^*$ um einen Wert der Zielfarbendaten in der Dimension U in dem YUV-Raum handelt und es sich bei $Y^*$ um einen Wert der Zielfarbendaten in der Dimension V in dem YUV-Raum handelt,

wobei es sich bei $\overline{(meanY,meanU,meanV)}$ um den ursprünglichen Mittelwert handelt, es sich bei *meanY* um einen Wert des ursprünglichen Mittelwerts in der Dimension Y in dem YUV-Raum handelt, es sich bei *meanU* um einen Wert des ursprünglichen Mittelwerts in der Dimension U in dem YUV-Raum handelt und es sich bei *meanV* um einen Wert des ursprünglichen Mittelwerts in der Dimension V in dem YUV-Raum handelt,

wobei es sich bei $\overline{(deltaY,deltaU,deltaV)}$ um die ursprüngliche Standardabweichung handelt, es sich bei *deltaY* um einen Wert der ursprünglichen Standardabweichung in der Dimension Y in dem YUV-Raum handelt, es sich bei *deltaU* um einen Wert der ursprünglichen Standardabweichung in der Dimension U in dem YUV-Raum handelt und es sich bei *deltaV* um einen Wert der ursprünglichen Standardabweichung in der Dimension V in dem YUV-Raum handelt,

wobei es sich bei $\overline{(meanY_{iType},meanU_{iType},meanV_{iType})}$ um den voreingestellten Mittelwert des festgelegten Hautfarbenmodells handelt, es sich bei $meanY_{iType}$ um einen Wert des voreingestellten Mittelwerts in der Dimension Y in dem YUV-Raum handelt, es sich bei $meanU_{iType}$ um einen Wert des voreingestellten Mittelwerts in der Dimension U in dem YUV-Raum handelt und es sich bei $meanV_{iType}$ um einen Wert des voreingestellten Mittelwerts in der Dimension V in dem YUV-Raum handelt, und

wobei es sich bei $\overline{(deltaY_{iType},deltaU_{iType},deltaV_{iType})}$ um die voreingestellte Standardabweichung des festgelegten Hautfarbenmodells handelt, es sich bei $deltaY_{iType}$ um einen Wert der voreingestellten Standardabweichung in der Dimension Y in dem YUV-Raum handelt, es sich bei $deltaU_{iType}$ um einen Wert der voreingestellten Standardabweichung in der Dimension U in dem YUV-Raum handelt und es sich bei $deltaV_{iType}$ um einen Wert der voreingestellten Standardabweichung in der Dimension V in dem YUV-Raum handelt.

**11.** Vorrichtung nach Anspruch 10, wobei das Hautfarbeneinstellungsmodul umfasst:

eine Hautfarbeneinstellungseinheit, die dazu ausgestaltet ist, die ursprünglichen Farbendaten von jedem Pixel in der Hautfarbenregion derart einzustellen, dass es sich um die Zielfarbendaten von jedem Pixel handelt.

**12.** Vorrichtung nach einem beliebigen der Ansprüche 7 bis 11, wobei die Vorrichtung ferner umfasst:

ein Hautfarbenmodell-Voreinstellungsmodul, das dazu ausgestaltet ist, die Vielzahl von voreingestellten Hautfarbenmodellen einzustellen, wobei die Modelle ein erstes voreingestelltes Hautfarbenmodell, ein zweites voreingestelltes Hautfarbenmodell, ein drittes voreingestelltes Hautfarbenmodell, ein viertes voreingestelltes Hautfarbenmodell, ein fünftes voreingestelltes Hautfarbenmodell und ein sechstes voreingestelltes Hautfarbenmodell umfassen,

wobei ein voreingestellter Mittelwert und eine voreingestellte Standardabweichung des ersten voreingestellten Hautfarbenmodells durch Erfassen von Farbendaten von Probenbildern von Menschen heller weißer Hautfarbe erhalten werden,

wobei ein voreingestellter Mittelwert und eine voreingestellte Standardabweichung des zweiten voreingestellten Hautfarbenmodells durch Erfassen von Farbendaten von Probenbildern von Menschen dunkler weißer Hautfarbe erhalten werden,

wobei ein voreingestellter Mittelwert und eine voreingestellte Standardabweichung des dritten voreingestellten Hautfarbenmodells durch Erfassen von Farbendaten von Probenbildern von Menschen heller gelber Hautfarbe erhalten werden,

wobei ein voreingestellter Mittelwert und eine voreingestellte Standardabweichung des vierten voreingestellten Hautfarbenmodells durch Erfassen von Farbendaten von Probenbildern von Menschen dunkler gelber Hautfarbe erhalten werden,

wobei ein voreingestellter Mittelwert und eine voreingestellte Standardabweichung des fünften voreingestellten Hautfarbenmodells durch Erfassen von Farbendaten von Probenbildern von Menschen heller schwarzer Hautfarbe erhalten werden, und

wobei ein voreingestellter Mittelwert und eine voreingestellte Standardabweichung des sechsten voreingestellten Hautfarbenmodells durch Erfassen von Farbendaten von Probenbildern von Menschen dunkler schwarzer Hautfarbe erhalten werden.

**13.** Vorrichtung (400) zum Einstellen der Hautfarbe, wobei die Vorrichtung umfasst:

einen Prozessor (422), und
einen Speicher (432) zum Speichern von durch den Prozessor ausführbaren Anweisungen,
wobei der Prozessor ausgestaltet ist zum:

Identifizieren einer Hautfarbenregion eines Bilds,

Erfassen von ursprünglichen Farbendaten von Pixeln in der Hautfarbenregion, um einen ursprünglichen Mittelwert und eine ursprüngliche Standardabweichung der Pixel in der Hautfarbenregion zu erhalten,

Auswählen eines festgelegten Hautfarbenmodells, das der Hautfarbenregion am ähnlichsten ist, aus einer Vielzahl von voreingestellten Hautfarbenmodellen gemäß dem ursprünglichen Mittelwert und einem voreingestellten Mittelwert der voreingestellten Hautfarbenmodelle, wobei die voreingestellten Hautfarbenmodelle Hautfarbentypen darstellen,

Bestimmen von Zielfarbendaten gemäß den ursprünglichen Farbendaten, dem ursprünglichen Mittelwert, der ursprünglichen Standardabweichung und dem voreingestellten Mittelwert und einer voreingestellten Standardabweichung des festgelegten Hautfarbenmodells, und

Einstellen der Hautfarbenregion gemäß den Zielfarbendaten.

14. Computerprogramm, das Anweisungen zum Ausführen der Schritte eines Verfahrens zum Einstellen einer Hautfarbe nach einem beliebigen der Ansprüche 1 bis 6, wenn das Programm durch einen Computer ausgeführt wird, beinhaltet.

15. Aufzeichnungsmedium, das durch einen Computer gelesen werden kann und auf dem ein Computerprogramm aufgezeichnet ist, das Anweisungen zum Ausführen der Schritte eines Verfahrens zum Einstellen einer Hautfarbe nach einem beliebigen der Ansprüche 1 bis 6 beinhaltet.

## Revendications

1. Procédé pour l'ajustement de couleur de peau, le procédé comprenant :

l'identification (101) d'une région de couleur de peau d'une image ;

le comptage (102) de données de couleur d'origine de pixels dans la région de couleur de peau pour obtenir une valeur moyenne d'origine et un écart type d'origine des pixels dans la région de couleur de peau ;

le choix (103) d'un modèle de couleur de peau désigné le plus similaire à la région de couleur de peau parmi plusieurs modèles de couleur de peau prédéterminés selon la valeur moyenne d'origine et les valeurs moyennes prédéterminées des modèles de couleur de peau prédéterminés, les modèles de couleur de peau prédéterminés représentant des types de couleur de peau ;

la détermination (104) de données de couleur cible selon les données de couleur d'origine, la valeur moyenne d'origine, l'écart type d'origine et la valeur moyenne prédéterminée et un écart type prédéterminé du modèle de couleur de peau désigné ; et

l'ajustement (105) de la région de couleur de peau selon les données de couleur cible.

2. Procédé selon la revendication 1, dans lequel l'étape de choix du modèle de couleur de peau désigné le plus similaire à la région de couleur de peau parmi les plusieurs modèles de couleur de peau comprend :

le calcul d'une différence entre la valeur moyenne d'origine et les valeurs moyennes prédéterminées des plusieurs modèles de couleur de peau ; et

le choix du modèle de couleur de peau désigné parmi les plusieurs modèles de couleur de peau, la différence entre la valeur moyenne prédéterminée de ce modèle de couleur de peau désigné et la valeur moyenne d'origine étant minimale.

3. Procédé selon la revendication 1, dans lequel l'étape de choix du modèle de couleur de peau désigné le plus similaire à la région de couleur de peau parmi les plusieurs modèles de couleur de peau comprend :

le calcul d'une distance Euclidienne entre la valeur moyenne d'origine et les plusieurs valeurs moyennes prédéterminées ; et

le choix du modèle de couleur de peau désigné parmi les plusieurs modèles de couleur de peau prédéterminés, la distance Euclidienne entre la valeur moyenne prédéterminée de ce modèle de couleur de peau désigné et la valeur moyenne d'origine étant minimale.

4. Procédé selon l'une quelconque des revendications 1 à 3, dans lequel les données de couleur sont des données YUV, et l'étape de détermination des données de couleur cible selon les données de couleur d'origine, la valeur moyenne d'origine, l'écart type d'origine, et la valeur moyenne prédéterminée et l'écart type prédéterminé du modèle de couleur de peau désigné comprend :

par rapport à chaque pixel dans la région de couleur de peau, la détermination des données de couleur cible du pixel selon les données de couleur d'origine, la valeur moyenne d'origine, et l'écart type d'origine du pixel, et la valeur moyenne prédéterminée et l'écart type prédéterminé du modèle de couleur de peau désigné par application des formules qui suivent :

$$Y^* = Y_{iType}moyen + \frac{deltaY_{iType} * (Y - Ymoyen)}{deltaY};$$

$$U^* = U_{iType}moyen + \frac{deltaU_{iType} * (U - Umoyen)}{deltaU};$$

$$V^* = V_{iType}moyen + \frac{deltaV_{iType} * (V - Vmoyen)}{deltaV};$$

dans lequel $\overline{(Y,U,V)}$ sont les données de couleur d'origine du pixel, $Y$ est une valeur des données de couleur d'origine sur une dimension Y dans un espace YUV, $U$ est une valeur des données de couleur d'origine sur une dimension U dans l'espace YUV, et $V$ est une valeur des données de couleur d'origine sur une dimension V dans l'espace YUV ;

$\overline{(Y^*,U^*,V^*)}$ sont les données de couleur cible du pixel, $Y^*$ est une valeur des données de couleur cible sur la dimension Y dans l'espace YUV, $U^*$ est une valeur des données de couleur cible sur la dimension U dans l'espace YUV, et $V^*$ est une valeur des données de couleur cible sur la dimension V dans l'espace YUV ;

$\overline{(Ymoyen,Umoyen,Vmoyen)}$ est la valeur moyenne d'origine, $Ymoyen$ est une valeur de la valeur moyenne d'origine sur la dimension Y dans l'espace YUV, $Umoyen$ est une valeur de la valeur moyenne d'origine sur la dimension U dans l'espace YUV, et $Vmoyen$ est une valeur de la valeur moyenne d'origine sur la dimension V dans l'espace YUV ;

$\overline{(deltaY,deltaU,deltaV)}$ est l'écart type d'origine, $deltaY$ est une valeur de l'écart type d'origine sur la dimension Y dans l'espace YUV, $deltaU$ est une valeur de l'écart type d'origine sur la dimension U dans l'espace YUV, et $deltaV$ est une valeur de l'écart type d'origine sur la dimension V dans l'espace YUV ;

$\overline{(Y_{iType}moyen,U_{iType}moyen,V_{iType}moyen)}$ est la valeur moyenne prédéterminée du modèle de couleur de peau désigné, $Y_{iType}moyen$ est une valeur de la valeur moyenne prédéterminée sur la dimension Y dans l'espace YUV, $U_{iType}moyen$ est une valeur de la valeur moyenne prédéterminée sur la dimension U dans l'espace YUV, et $V_{iType}moyen$ est une valeur de la valeur moyenne prédéterminée sur la dimension V dans l'espace YUV ; et

$\overline{(deltaY_{iType},deltaU_{iType},deltaV_{iType})}$ est l'écart type prédéterminé du modèle de couleur de peau désigné, $deltaY_{itype}$ est une valeur de l'écart type prédéterminé sur la dimension Y dans l'espace YUV, $deltaU_{iType}$ est une valeur de l'écart type prédéterminé sur la dimension U dans l'espace YUV, et $deltaV_{iType}$ est une valeur de l'écart type prédéterminé sur la dimension V dans l'espace YUV.

5. Procédé selon la revendication 4, dans lequel l'étape d'ajustement de la région de couleur de peau selon les données de couleur cible comprend :
l'ajustement des données de couleur d'origine de chaque pixel dans la région de couleur d'origine pour qu'elles soient les données de couleur cible de chaque pixel.

6. Procédé selon l'une quelconque des revendications 1 à 5, dans lequel les plusieurs modèles de couleur de peau prédéterminés comprennent un premier modèle de couleur de peau prédéterminé, un second modèle de couleur de peau prédéterminé, un troisième modèle de couleur de peau prédéterminé, un quatrième modèle de couleur de peau prédéterminé, un cinquième modèle de couleur de peau prédéterminé et un sixième modèle de couleur de peau prédéterminé ;
une valeur moyenne prédéterminée et un écart type prédéterminé du premier modèle de couleur de peau prédéterminé sont obtenus par comptage de données de couleur d'images d'échantillons de population blanche claire ;

une valeur moyenne prédéterminée et un écart type prédéterminé du second modèle de couleur de peau prédéterminé sont obtenus par comptage de données de couleur d'images d'échantillons de population blanche foncée ;

une valeur moyenne prédéterminée et un écart type prédéterminé du troisième modèle de couleur de peau prédéterminé sont obtenus par comptage de données de couleur d'images d'échantillons de population jaune claire ;

une valeur moyenne prédéterminée et un écart type prédéterminé du quatrième modèle de couleur de peau prédéterminé sont obtenus par comptage de données de couleur d'images d'échantillons de population jaune foncée ;

une valeur moyenne prédéterminée et un écart type prédéterminé du cinquième modèle de couleur de peau prédéterminé sont obtenus par comptage de données de couleur d'images d'échantillons de population noire claire ; et

une valeur moyenne prédéterminée et un écart type prédéterminé du sixième modèle de couleur de peau prédéterminé sont obtenus par comptage de données de couleur d'images d'échantillons de population noire foncée.

7. Dispositif pour l'ajustement de couleur de peau, le dispositif comprenant :

un module d'identification de région de couleur de peau (301) configuré pour identifier une région de couleur de peau d'une image ;

un module de comptage (302) configuré pour compter des données de couleur d'origine de pixels dans la région de couleur de peau pour obtenir une valeur moyenne d'origine et un écart type d'origine des pixels dans la région de couleur de peau ;

un module de désignation de modèle de couleur de peau (303) configuré pour choisir un modèle de couleur de peau désigné le plus similaire à la région de couleur de peau parmi plusieurs modèles de couleur de peau prédéterminés selon les valeur moyenne d'origine et valeurs moyennes prédéterminées des modèles de couleur de peau prédéterminés, les modèles de couleur de peau prédéterminés représentant des types de couleur de peau ;

un module de détermination de couleur cible (304) configuré pour déterminer des données de couleur cible selon les données de couleur d'origine, la valeur moyenne d'origine, l'écart type d'origine, et la valeur moyenne prédéterminée et un écart type prédéterminé du modèle de couleur de peau désigné ; et

un module d'ajustement de couleur de peau (305) configuré pour ajuster la région de couleur de peau selon les données de couleur cible.

8. Dispositif selon la revendication 7, dans lequel le module de désignation de modèle de couleur de peau comprend :

une unité de calcul de similarité configurée pour calculer une différence entre la valeur moyenne d'origine et les plusieurs modèles de couleur de peau prédéterminés ; et

une unité de choix de modèle de couleur de peau configurée pour choisir le modèle de couleur de peau désigné parmi les plusieurs modèles de couleur de peau prédéterminés, la différence entre la valeur moyenne prédéterminée de ce modèle de couleur de peau désigné et la valeur moyenne d'origine étant minimale.

9. Dispositif selon la revendication 7, dans lequel le module de désignation de modèle de couleur de peau comprend :

une unité de calcul de distance Euclidienne configurée pour calculer une distance Euclidienne entre la valeur moyenne d'origine et les valeurs moyennes prédéterminées ; et

une unité de choix de modèle de couleur de peau configurée pour choisir le modèle de couleur de peau désigné parmi les modèles de couleur de peau prédéterminés ;

la distance Euclidienne entre la valeur moyenne prédéterminée de ce modèle de couleur de peau désigné et la valeur moyenne d'origine étant minimale.

10. Dispositif selon l'une quelconque des revendications 7 à 9, dans lequel le dispositif utilise des données YUV comme les données de couleur ;

le module de détermination de couleur cible est configuré pour, par rapport à chaque pixel dans la région de couleur de peau, déterminer les données de couleur cible du pixel selon les données de couleur d'origine, la valeur moyenne d'origine, et l'écart type d'origine du pixel, et la valeur moyenne prédéterminée et l'écart type prédéterminé du modèle de couleur de peau désigné par application des formules qui suivent :

$$Y^* = Y_{iType}moyen + \frac{deltaY_{iType} * (Y - Ymoyen)}{deltaY};$$

$$U^{\bullet} = U_{iType}\text{moyen} + \frac{deltaU_{iType} * (U - \text{Umoyen})}{deltaU} ;$$

$$V^{\bullet} = V_{iType}\text{moyen} + \frac{deltaV_{iType} * (V - \text{Vmoyen})}{deltaV} ;$$

dans lequel $\overline{(Y,U,V)}$ sont les données de couleur d'origine du pixel, Y est une valeur des données de couleur d'origine sur une dimension Y dans un espace YUV, *U* est une valeur des données de couleur d'origine sur une dimension U dans l'espace YUV, et *V est* une valeur des données de couleur d'origine sur une dimension V dans l'espace YUV ;

$\overline{(Y^*,U^*,V^*)}$ sont les données de couleur cible du pixel, *Y\** est une valeur des données de couleur cible sur la dimension Y dans l'espace YUV, *U\** est une valeur des données de couleur cible sur la dimension U dans l'espace YUV, et *V\** est une valeur des données de couleur cible sur la dimension V dans l'espace YUV ;

$\overline{(Ymoyen,Umoyen,Vmoyen)}$ est la valeur moyenne d'origine, *Ymoyen* est une valeur de la valeur moyenne d'origine sur la dimension Y dans l'espace YUV, *Umoyen* est une valeur de la valeur moyenne d'origine sur la dimension U dans l'espace YUV, et *Vmoyen* est une valeur de la valeur moyenne d'origine sur la dimension V dans l'espace YUV ;

$\overline{(deltaY,deltaU,deltaV)}$ est l'écart type d'origine, *deltaY* est une valeur de l'écart type d'origine sur la dimension Y dans l'espace YUV, *deltaU* est une valeur de l'écart type d'origine sur la dimension U dans l'espace YUV, et *deltaV* est une valeur de l'écart type d'origine sur la dimension V dans l'espace YUV ;

$\overline{(Y_{iType}moyen,U_{iType}moyen,V_{iType}moyen)}$ est la valeur moyenne prédéterminée du modèle de couleur de peau désigné, $Y_{iType}moyen$ est une valeur de la valeur moyenne prédéterminée sur la dimension Y dans l'espace YUV, $U_{iType}moyen$ est une valeur de la valeur moyenne prédéterminée sur la dimension U dans l'espace YUV, et $V_{iType}moyen$ est une valeur de la valeur moyenne prédéterminée sur la dimension V dans l'espace YUV ; et

$\overline{(deltaY_{iType},deltaU_{iType},deltaV_{iType})}$ est l'écart type prédéterminé du modèle de couleur de peau désigné, $deltaY_{itype}$ est une valeur de l'écart type prédéterminé sur la dimension Y dans l'espace YUV, $deltaU_{iType}$ est une valeur de l'écart type prédéterminé sur la dimension U dans l'espace YUV, et $deltaV_{iType}$ est une valeur de l'écart type prédéterminé sur la dimension V dans l'espace YUV.

11. Dispositif selon la revendication 10, dans lequel le module d'ajustement de couleur de peau comprend :
une unité d'ajustement de couleur de peau configurée pour ajuster les données de couleur d'origine de chaque pixel dans la région de couleur de peau pour qu'elles soient les données de couleur cible de chaque pixel.

12. Dispositif selon l'une quelconque des revendications 7 à 11, dans lequel le dispositif comprend de plus :

un module prédéterminé de modèle de couleur de peau configuré pour déterminer les plusieurs modèles de couleur de peau prédéterminés, les modèles comprenant un premier modèle de couleur de peau prédéterminé, un second modèle de couleur de peau prédéterminé, un troisième modèle de couleur de peau prédéterminé, un quatrième modèle de couleur de peau prédéterminé, un cinquième modèle de couleur de peau prédéterminé et un sixième modèle de couleur de peau prédéterminé ;
une valeur moyenne prédéterminée et un écart type prédéterminé du premier modèle de couleur de peau prédéterminé sont obtenus par comptage de données de couleur d'images d'échantillons de population blanche claire ;
une valeur moyenne prédéterminée et un écart type prédéterminé du second modèle de couleur de peau prédéterminé sont obtenus par comptage de données de couleur d'images d'échantillons de population blanche foncée ;
une valeur moyenne prédéterminée et un écart type prédéterminé du troisième modèle de couleur de peau prédéterminé sont obtenus par comptage de données de couleur d'images d'échantillons de population jaune claire ;
une valeur moyenne prédéterminée et un écart type prédéterminé du quatrième modèle de couleur de peau prédéterminé sont obtenus par comptage de données de couleur d'images d'échantillons de population jaune foncée ;
une valeur moyenne prédéterminée et un écart type prédéterminé du cinquième modèle de couleur de peau prédéterminé sont obtenus par comptage de données de couleur d'images d'échantillons de population noire claire ; et
une valeur moyenne prédéterminée et un écart type prédéterminé du sixième modèle de couleur de peau prédéterminé sont obtenus par comptage de données de couleur d'images d'échantillons de population noire foncée.

13. Dispositif (400) pour l'ajustement de couleur de peau, le dispositif comprenant :

un processeur (422) ; et
une mémoire (432) pour stocker des instructions pouvant être exécutées par le processeur ;
dans lequel le processeur est configuré pour :

identifier une région de couleur de peau d'une image ;
compter les données de couleur d'origine de pixels dans la région de couleur de peau pour obtenir une valeur moyenne d'origine et un écart type d'origine des pixels dans la région de couleur de peau ;
choisir un modèle de couleur de peau désigné le plus similaire à la région de couleur de peau parmi plusieurs modèles de couleur de peau prédéterminés selon la valeur moyenne d'origine et une valeur moyenne prédéterminée des modèles de couleur de peau prédéterminés, les modèles de couleur de peau prédéterminés représentant des types de couleur de peau ;
déterminer les données de couleur cible selon les données de couleur d'origine, la valeur moyenne d'origine, l'écart type d'origine, et la valeur moyenne prédéterminée et un écart type prédéterminé du modèle de couleur de peau désigné ; et
ajuster la région de couleur de peau selon les données de couleur cible.

14. Programme d'ordinateur incluant des instructions pour exécuter les étapes d'un procédé pour l'ajustement d'une couleur de peau selon l'une quelconque des revendications 1 à 6 lorsque ledit programme est exécuté par un ordinateur.

15. Support d'enregistrement pouvant être lu par un ordinateur et présentant enregistré sur son dessus un programme d'ordinateur incluant des instructions pour exécuter les étapes d'un procédé pour l'ajustement d'une couleur de peau selon l'une quelconque des revendications 1 à 6.

Identify a skin color region of an image ⌐~101

Count original color data of pixels in the skin color region to obtain an original mean value and an original standard deviation of the pixels in the skin color region ⌐~102

Select a designated skin color model most similar to the skin color region from at least one preset skin color model according to the original mean value and a preset mean value of the at least one preset skin color model, the preset skin color model representing skin color types ⌐~103

Determine target color data according to the original color data, the original mean value, the original standard deviation, and the preset mean value and a preset standard deviation of the designated skin color model ⌐ 104

Adjust the skin color region according to the target color data ⌐ 105

## Fig. 1

Server identifies a skin color region of an image, counts original color data of pixels in the skin color region to obtain an original mean value and an original standard deviation of the pixels in the skin color region ⌐ 201

The server calculates a similarity between the original mean value and the preset mean value of the at least one preset skin color model, selects a designated skin color model from the at least one preset skin color model, the similarity between the preset mean value of this designated skin color model and the original mean value being maximum, and determines the preset mean value and the preset standard deviation of the designated skin color model ⌐ 202

The server determines target color data according to the original color data, the original mean value, the original standard deviation, and the preset mean value and the preset standard deviation of the designated skin color model, and adjusts the skin color region according to the target color data ⌐ 203

## Fig. 2

Skin Color Region
Identification
Module ⌐ 301

Counting Module ⌐ 302

Skin Color Model
Designation Module ⌐ 303

Target Color
Determination
Module ⌐ 304

Skin Color
Adjustment Module ⌐ 305

Fig. 3

**400**

422 ～ Processing Component | Power Component ～ 426

432 ～ Memory | Network Interface ～ 450

I/O Interface ～ 458

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2509047 A

**Non-patent literature cited in the description**

- **KAKUMANU et al.** A survey of skin-color modeling and detection methods. *PATTERN RECOGNITION,* 06 November 2006, vol. 40 (3), 1106-1122